# EUROPEAN PATENT APPLICATION

(11) **EP 2 667 027 A1**
(43) Date of publication of application: **27.11.2013**
(21) Application number: 12169280.0
(22) Date of filing: 24.05.2012
(51) Int. Cl.: F03G 6/00, F01K 13/02, F01K 7/08

(54) **Steam rankine cycle solar plant and method for operating such plants**

(71) Applicant: Alstom Technology Ltd, 5400 Baden (CH)
(72) Inventor: Herzog, Maurus, 5107 Schinznach Dorf (CH)

(57) **Abstract**

The invention relates to a Steam Rankine cycle solar plant 10 and a method of operating thereof. The plant 10 comprises a steam generator 20 for generating steam from solar thermal energy, a feed line 32 connected to the steam generator 20 and a multi-stage turbine 30, with a first stage and an intermediate stage downstream of the first stage, connected to the steam generator 20 by the feed line 32. The plant 10 further includes an overload valve 45 located in the feed line 32. This overload valve 45 is configure and arranged to limit the steam pressure of the first stage by directing at least a portion of the steam into the intermediate stage above a predetermined steam turbine inlet pressure.

## Description

### TECHNICAL FIELD

The present disclosure relates generally to steam Rankine cycle solar plants and more specifically to the optimisation of the performance of the turbine within the steam cycle of such solar plants.

### BACKGROUND INFORMATION

In its most basic form, a solar thermal power plant consists of solar concentrators with mirrors that concentrate the solar radiation to one or more receivers where it is converted to high temperature heat energy. A common configuration of solar thermal power plant is based on conventional Rankine-cycle power generation equipment. Generally, solar thermal applications that are based on the steam Rankine cycle typically fall into two general capture technology categories: linear focussing technology such as parabolic troughs and linear Fresnel concentrators; and point focusing concentrators, such as solar power towers.

A parabolic trough is a type of concentrator that is constructed as a long parabolic mirror. At the focal point of the mirror is a Dewar tube through which heat transfer medium is passed and heated.

Linear Fresnel concentrators are similar to parabolic collects in that they focus solar energy along a line. However, they differ in that the mirror comprises horizontally mounted flat mirror stripes that collectively or individually track the sun.

A solar power tower, also known as 'central tower' power plants or 'heliostat' power plants or simply power towers, is a type of solar furnace using a tower to receive the focused sunlight. The solar power tower typically uses an array of flat, movable mirrors (heliostats) to focus the sun's rays upon a collecting tower. In a steam Rankine cycle solar plant, steam is generated from the concentrated energy at the top of the tower either directly via a solar boiler located in the tower or else via a heat transfer medium chosen for its high heat capacity. By having a high heat capacity the heat transfer medium may suitably be used for the secondary purpose of storing energy during periods of low solar intensity for later use in the thermal cycle. Examples of suitable heat transfer medium include liquid sodium and molten sale (40% potassium nitrate, 60% sodium nitrate).

One of the characteristic of solar supply is its variable nature. Not only do solar plants need to cope with day/night variations and seasonal variations but also other factors that block or dissipate solar radiation, such as clouds, atmospheric dust and pollution. The demands on the systems are therefore very high which means that the equipment must be able to operated across a wide range of operating conditions far greater than that experience by conventional systems.

Accordingly, the steam generator, which may either be a superheater or a reheater, can produce a correspondingly large variation in steam quantity as well as steam temperature. Not only must the steam turbine of the plant be designed to cope with relatively rare peak conditions, but the same must be done for other auxiliary equipment include the steam generator, the live-steam lines and other live-steam path components. This means, while the design is typically optimised for the unusual "100% load case" it typically operates, due to oversizing, with lower efficiency at "average conditions".

One solution is to provide a steam turbine optimised for "average conditions" and reduce the solar collection capacity during periods of peak solar activity by, for example, defocusing the heliostatic mirrors of a solar power tower or not tracking the sun with parabolic mirrors of trough plants. This leads to a lost of potential energy generation.

Another alternative, in particularly for solar power towers that utilise heat transfer medium loops, is to divert some of the heated heat transfer medium to storage during insolation peaks for later use during low solar thermal intensity, for example, in the evening or at night. This requires a large storage system.

A further alternative is to provide multiple steam turbines wherein the turbines are configured so that the number of steam turbines placed in service is based on the solar load. This adds both complexity and cost to the installation.

### SUMMARY

A steam Rankine cycle solar plant is disclosed that enables a multistage turbine of the solar plant to be optimisation for efficiency at average conditions while still having peaking capacity.

Embodiments attempt to address this problem by means of the subject matters of the independent claims. Advantageous embodiments are given in the dependent claims.

According to an aspect of an exemplary embodiment, there is provided a steam Rankine cycle solar plant comprising a steam generator for generating steam, a feed line connected to the steam generator and a multi-stage turbine connected to the steam generator by the feed line wherein the turbine has a first stage and an intermediate stage downstream of the first stage. An overload valve, which is located in the feed line, is configure and arranged to limit the steam pressure of the first stage by directing at least a portion of the steam into the intermediate stage. In this way, a portion of steam can bypass the first stage, thus providing the turbine with peaking capacity.

In another aspect, the plant further comprises a sensor configured and arranged to measure pressure in the feed line to the turbine. In addition, the plant also comprises a controller in measurement communication with the sensor and in control communication with the overload valve. The controller is configured to adjust the overload valve based on the measurement of the sensor.

Another aspect includes a solar plant comprising both a heat transfer medium cycle and a steam Rankine cycle. The steam generator is configured and arranged in both cycles to transfer heat from the heat transfer medium cycle to the steam Rankine cycle.

In another aspect, a solar plant includes a solar thermal energy storage means configured and arranged to store solar thermal energy from the heat transfer medium cycle for later use in the steam generator.

Another aspect provides a method for controlling a steam Rankine cycle solar steam plant. The method includes the steps of:
● providing a steam Rankine cycle with a multistage turbine
● feeding steam to the turbine;
● measuring pressure in a feed line to the turbine; and
● varying the proportion of steam fed directly to an intermediate stage of the turbine based on the measured pressure.

In an aspect, the measurement step comprises measuring steam in the steam Rankine cycle as it is fed to the turbine.

In another aspect, the method comprises providing the plant with a heat transfer medium cycle and transferring solar thermal energy from the heat transfer medium cycle to the Steam Rankine cycle by means of a steam generator.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings, which, by way of example, illustrate exemplary embodiments of the present invention.

### BRIEF DESCRIPTION OF THE DRAWINGS

By way of example, an embodiment of the present disclosure is described more fully hereinafter with reference to the accompanying drawings, in which:
Figure 1 is a schematic view of an exemplary steam Rankine cycle solar plant with a control system according to an exemplary embodiment of the disclosure; and
Figure 2 is a schematic view of an exemplary steam Rankine cycle solar plant of Fig. 1 with a reheat turbine; and
Figure 3 is a schematic view of the exemplary steam Rankine cycle solar plant of Fig. 1 with a heat transfer medium cycle.

### DETAILED DESCRIPTION

Exemplary embodiments of the present disclosure are now described with reference to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

Throughout this specification, in relation to various exemplary embodiments the meaning of the term steam generator 20 is to encompass a boiler, superheater and reheater or any combination thereof.

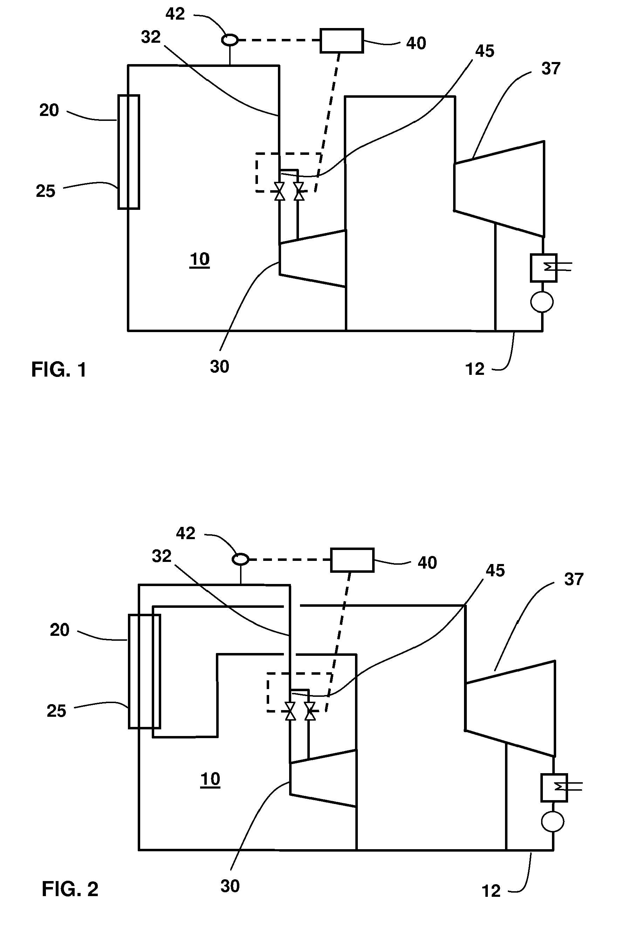

Fig. 1 shows an exemplary steam Rankine cycle solar plant 10 that compromises a steam generator 20 for generating steam, a multi-stage turbine 30 having a first stage and an intermediate stage downstream of the first stage and a feed line 32 therebetween fluidly connecting the steam generator 29 to the turbine 30. Optionally, a second turbine 37, downstream of the turbine 30 is feed from the exhaust of the turbine 30.

Each stage of a multi-stage turbine 30 is defined as an adjacent pair of stationary vanes and rotating blades rows wherein the first stage is at the inlet end of the turbine, the last stage is at the outlet end of the turbine, and intermediate stages are located between the first and last stage.

An exemplary embodiment shown in both Figs 1 includes an overload valve 45 located in the feed line 32 to the turbine 30. The overload valve 45, which may comprise a one or more valves, is configured and arranged to divert a portion of steam from the steam generator 20 directly into an intermediate stage of the turbine 30 downstream of the first stage into and but upstream of the last stage. In this way, at least a portion of the steam from the steam generator 20 bypasses the first stage of the turbine 30.

An exemplary embodiment shown in both Figs 1 includes a sensor 42 located between the outlet of the solar energy concentrator 25 and the inlet of the turbine 30. The sensor 42 is configured to measure the pressure of the feed stream to the turbine 30, that is, the pressure in the feed line 32. A controller 40, in measurement communication with the sensor 42 uses an algorithm to interpret the pressure measurement from the sensor 42 and generate an output signal which is transmited to the overload valve 45. The algorithm is configured to open the overload valve 45 above a critical pressure thus limiting the pressure in the first stage of the turbine 30.

In an exemplary embodiment shown in Fig. 2 the overload valve 45 and controller 40 are applied to a solar Rankine cycle 12 with a reheat turbine 37.

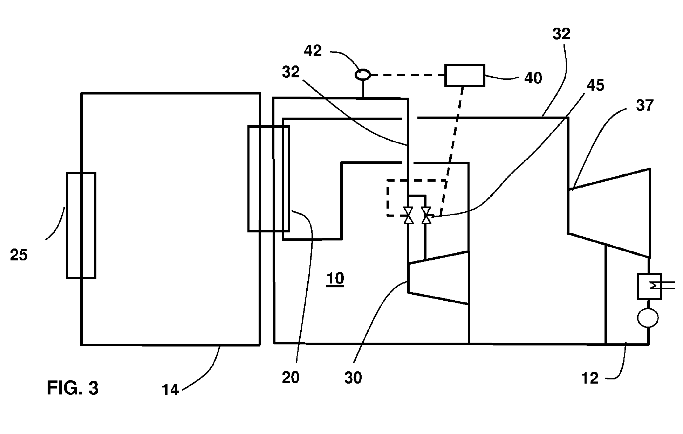

In an exemplary embodiment shown in Fig. 3, the overload valve 45 and controller 40 are applied to a solar plant 10 where the steam generator 20 is a standalone boiler whose energy input is provided via a heat transfer medium cycle 14 whose thermal energy source includes at least a solar energy concentrator 25.

Further exemplary embodiments relate to methods of controlling a steam Rankine cycle solar plant. In one exemplary embodiment, the method includes the steps of providing a steam Rankine cycle 12 with a multistage turbine 30 and providing a steam generator 20 who derives at least a portion of its thermal energy from a solar energy concentrator 25. Steam generated from the solar energy concentrator 25 is fed to the turbine 30 either directly in the case where the solar plant 10 comprises only a steam Rankine cycle 12 as shown in Fig. 1 or indirectly when the solar plant 10 comprises an additional heat transfer medium cycle 14 as shown in Fig. 3. In addition, the feedline 32 is provided with an overload valve 45, which is capable of splitting feed to the turbine 30 and directing it to the first stage and an intermediate stage of the turbine 30 simultaneously.

Pressure in the feed line 32 is then measured and provided to a controller 40. The controller 40 then uses an algorithm to provide the overload valve 45 with a control signal. The controller 40 and its algorithm is such that the proportion of steam first directly to the intermediate stage, that is bypassing the first stage, is varied based on the measured pressure so by limiting the maximum steam pressure at the first stage of the turbine 30. In an exemplary embodiment this is achieved by the overload valve 45 directs all steam feed to the first stage of the turbine 30 below a predetermined pressure and at least some steam feed to the directly to the intermediate stage above a predetermined pressure.

Another exemplary method additionally provides to a heat transfer medium cycle 14 to the solar plant 10 wherein the steam generator 20 is a heat exchanger that exchanges solar thermal energy between the heat transfer medium cycle 14 and the steam Rankine cycle 12.

Although the disclosure has been herein shown and described in what is conceived to be the most practical exemplary embodiment, it will be appreciated by those skilled in the art that the present disclosure can be embodied in other specific forms. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: Steam Rankine cycle solar plant
- 12: Steam Rankine cycle
- 14: Heat transfer medium cycle
- 20: Steam generator
- 25: Solar energy concentrator
- 30: Multistage turbine
- 32: Feed line
- 37: Reheat turbine
- 40: Controller
- 42: Sensor
- 45: Overload valve

## Claims

1. A Steam Rankine cycle solar plant (10) comprising:
a steam generator (20) for generating steam from solar thermal energy;
a feed line (32) connected to the steam generator (20); and
a multi-stage turbine (30), with a first stage and an intermediate stage downstream of the first stage, connected to the steam generator (20) by the feed line (32),
**characterised by** an overload valve (45), located in the feed line (32), configure and arranged to limit the steam pressure of the first stage by directing at least a portion of the steam into the intermediate stage.

2. The solar plant (10) of claim 1 further comprising:
a sensor (42), in the feed line (32), configured and arranged to measure pressure; and
a controller (40) in measurement communication with the sensor (42) and in control communication with the overload valve (45),
wherein the controller (40) is configured to adjust the overload valve (45) based on the measurement of the sensor (42).

3. The solar plant (10) of claims 1 or 2 comprising both a heat transfer medium cycle (14) and a steam Rankine cycle (12),
wherein the steam generator (20) is configured and arranged in both cycles (12,14) to transfer solar thermal energy from the heat transfer medium cycle (14) to the Steam Rankine cycle (12).

4. A method for controlling a Steam Rankine cycle solar plant (10) comprising the steps of:
providing a steam Rankine cycle (12) with a multistage turbine (30);
measuring pressure in a feed line (32) to the turbine (30); and
varying the proportion of steam fed directly to an intermediate stage of the turbine (30) based on the measured pressure.

5. The method of claim 4 wherein steam is fed directly to an intermediate stage of the turbine (30) only after a predetermined measured pressure is exceeded.

6. The method of claim 4 or 5 comprising:
providing the plant with a heat transfer medium cycle (14); and
transferring solar thermal energy from the heat transfer medium cycle (14) to the Steam Rankine cycle (12) by means of a steam generator (20).
